# EUROPÄISCHE PATENTSCHRIFT

(11) **EP 1 390 126 B1**
(45) Veröffentlichungstag und Bekanntmachung des Hinweises auf die Patenterteilung: **27.09.2006**
(21) Anmeldenummer: 02732706.3
(22) Anmeldetag: 08.05.2002
(51) Int. Cl.: B01D 65/00

(54) **VERFAHREN ZUR VERRINGERUNG EINER ADSORPTIONSNEIGUNG VON MOLEKÜLEN ODER BIOLOGISCHEN ZELLEN AN EINER MATERIALOBERFLÄCHE**
METHOD FOR REDUCING AN ADSORPTION TENDENCY OF MOLECULES OR BIOLOGICAL CELLS ON A MATERIAL SURFACE
PROCEDE DE REDUCTION DE LA PROPENSION A L'ADSORPTION DE MOLECULES OU DE CELLULES BIOLOGIQUES SUR UNE SURFACE DE MATERIAU

(30) Priorität: 11.05.2001 DE 10123296
(43) Veröffentlichungstag der Anmeldung: 25.02.2004
(73) Patentinhaber: Poly-An Gesellschaft zur Herstellung von Polymeren für spezielle Anwendungen und Analytik mbH, 13086 Berlin (DE)
(72) Erfinder: THIELE, Thomas, 13351 Berlin (DE); STORM, Rüdiger, 10783 Berlin (DE); MATUSCHEWSKI, Heike, 13187 Berlin (DE); SCHEDLER, Uwe, 10119 Berlin (DE)
(74) Vertreter: Reinstädler, Diane
(86) Internationale Anmeldenummer: PCT/EP2002/005095
(87) Internationale Veröffentlichungsnummer: WO 2002/092201

(56) Entgegenhaltungen:
- EP-A- 0 392 362
- WO-A-02/28947
- US-A- 5 468 390
- US-A- 5 736 051

## Beschreibung

Die Erfindung betrifft ein Verfahren zur Verringerung einer Adsorptionsneigung von Molekülen oder biologischen Zellen aus Lösungen oder Suspensionen an einer mit der Lösung oder Suspension in Kontakt stehenden Materialoberfläche nach Anspruch 1 sowie Verwendungen des Verfahrens nach den Ansprüchen 11 bis 15.

Die Kontamination von festen Oberflächen im Kontakt mit wässrigen Medien durch Biofilmbildung ist ein als "Fouling" bekanntes Problem. So kommt es zum Beispiel bei Schiffen zu einem Algenbewuchs der Schiffsrümpfe und bei medizinischen Implantaten zu unkontrollierten Ablagerungen an den mit Körperflüssigkeiten in Kontakt stehenden Implantatoberflächen (auch als Biofouling oder Biokorrosion bezeichnet). Auch bei technischen Filtrationsprozessen durch Membranen wird ein - häufig durch Ablagerungen von Proteinen verursachtes - Fouling der Membranoberfläche beobachtet (so genanntes Membranfouling), das zu Verstopfungen der Membranporen führen kann. Im Falle des Proteinfoulings von Membranen lassen sich die Ursachen der Biofilmbildung auf zwei wesentliche Prozesse reduzieren. Zum einen findet eine Proteinaggregation an der Grenzfläche Membranoberfläche/Lösung statt oder in der Lösung, gefolgt von einer Ablagerung der Aggregate an der Membranoberfläche. Auf der anderen Seite kommt es zu einer unspezifischen Proteinadsorption nicht aggregierter Proteine an der Oberfläche. Als Folge davon kann es längerfristig zur Ansiedlung von Mikroorganismen oder komplexeren Strukturen (wie etwa bei Schiffsrümpfen) kommen.

Es werden verschiedene Einflussfaktoren auf das Ausmaß an Proteinfouling diskutiert, etwa die Struktur des Proteins in Lösung, chemische und physikalische Beschaffenheit der Oberfläche oder Prozessbedingungen, und Strategien zur Verringerung von Proteinfouling entwickelt. Dennoch besteht ein ungenügendes Verständnis über die Natur der Wechselwirkungen, die zu Proteinfouling führen. Daher sind derzeit Ansätze zur Vermeidung von Fouling oft empirisch und beinhalten oft eine chemische, hydrophilisierende oder hydrophobisierende Modifizierung der Oberflächen.

Ein Verfahren gemäß dem Oberbegriff des Anspruchs 1 ist aus US-A-5468390 und US-A-5736051 bekannt.

Der Erfindung liegt die Aufgabe zugrunde, ein neues Verfahren zur Verringerung der Adsorptionsneigung unterschiedlicher Materialien gegenüber Molekülen und/oder biologischen Zellen zur Verfügung zu stellen. Es sollen somit Gegenstände mit einer dem Fouling entgegenwirkenden Materialoberfläche ausgestattet werden, wobei das Verfahren eine große Variationsbreite hinsichtlich der chemischen, physikalischen oder strukturellen Beschaffenheit des konkreten Moleküls oder der Zelle aufweisen soll, um für möglichst viele Anwendungsbereiche in Frage zu kommen. Insbesondere soll das Verfahren für den Einsatz in der Lebensmittelindustrie, der Medizin, der Biotechnologie, der Abwasseraufbereitung und/oder dem Schiffsbau geeignet sein.

Diese Aufgabe wird durch ein Verfahren mit den im Anspruch 1 genannten Merkmalen, sowie durch seine Verwendungen gemäß den Ansprüchen 11 bis 15 gelöst.

Erfindungsgemäß sieht das Verfahren vor, dass als Material ein organisches oder anorganisches Trägermaterial mit einer modifizierten Oberfläche verwendet wird, wobei die Modifizierung der Oberfläche durch in-situ Polymerisation von in Abhängigkeit einer Beschaffenheit, insbesondere einer chemischen, physikalischen und/oder sterischen Eigenschaft des Moleküls oder der Zelle ausgewählter Monomere an der Oberfläche, erfolgt. Da die unmittelbar an der Materialoberfläche durchgeführte in-situ Polymerisation eine Oberflächenmodifizierung unter kovalenter Anbindung von Monomeren unterschiedlichster Eigenschaften erlaubt, wird erfindungsgemäß ein individuell auf die jeweilige Fouling-Problemstellung zugeschnittenes Antifouling-Material mit einer Oberfläche mit verringerter Adsorptionsneigung angeboten. Die chemisch kovalente Antifouling-Modifizierung hat zudem den Vorteil einer lang anhaltenden Stabilität. Somit eignet sich das Verfahren auch zur Anwendung für Langzeitanwendungen, etwa zur erfindungsgemäßen Modifizierung von Schiffsrümpfen. Hier ergibt sich eine stark retardierte Biofilmbildung und infolgedessen auch von Algenbewuchs. Für Membrananwendungen resultiert eine allgemein erhöhte Lebensdauer bei gleich bleibender Membranperformance.

Die verwendeten Monomere bestimmen die Antifouling-Eigenschaften des Materials. Die Auswahl des Monomers erfolgt dabei in Abhängigkeit einer elektrostatischen Ladung und/oder einer Polarität und/oder räumlichen Struktur des abzuweisenden Moleküls beziehungsweise der abzuweisenden Zelle, insbesondere ihrer äußeren Oberfläche, und zwar derart, dass die modifizierte Materialoberfläche eine möglichst geringe Affinität zu dem Molekül oder der Zelle aufweist. Insbesondere wird beispielsweise ein Monomer mit einer elektrostatischen Ladung gleichen Vorzeichens und/oder einer Polarität vergleichbarer Intensität wie das Molekül beziehungsweise die Zelle ausgewählt. Beispielsweise werden zur Unterbindung von Proteinadsorption hydrophilisierte Materialoberflächen angeboten, das heißt mit einem polaren Monomer modifizierte Oberflächen, an denen der primäre Schritt, die unspezifische Anlagerung wasserlöslicher und somit mit einer hydrophilen äußeren Moleküloberfläche ausgestatteter Proteine, weitestgehend unterbunden wird. Zur Erzielung der Hydrophilisierung gegen das Proteinfouling werden vorzugsweise anionische oder kationische oder auch mehrfunktionelle Oberflächen erzeugt und hierfür geeignete Monomere gewählt. Auch Tensid-Monomere werden verwendet.

Im Ergebnis lässt sich die Adsorptionsneigung von Materialoberflächen gegenüber einer Vielzahl bestimmter Moleküle (oder Stoffgruppen) und/oder Zellen gezielt herabsetzen, um den Fouling-Prozess zu unterbinden. Insbesondere kann die Auswahl des Monomers derart erfolgen, dass das Material eine verringerte Adsorptionsneigung für Proteine, Peptide, Peptoide, Peptidomimetika, Enzyme, Antikörper, Impfstoffe, Nukleinsäuren, insbesondere DNA, RNA oder Plasmide, Kohlenhydrate, Glucane, Huminstoffe und/oder Derivate von den vorgenannten Stoffen und/oder für andere organische Moleküle und/oder kleine Partikel erhält. Ebenso kann eine verringerte Adsorptionsneigung für mikrobielle Zellen, insbesondere für Bakterien, Pilze, Viren, Blutzellen, Gewebezellen und/oder dergleichen, durch geeignete Monomerenauswahl erzielt werden.

Das nach den oben angegebenen Kriterien ausgewählte Monomer muss daneben noch mit einer mit dem Trägermaterial reaktionsfähigen polymerisationsfähigen Gruppe, beispielsweise einer Doppelbindung, ausgestattet sein, die eine kovalente Anbindung an die gegebenenfalls noch vorbehandelte Materialoberfläche erlaubt. Die Modifizierung erfolgt durch photochemische in-situ Pfropfpolymerisation. Das Monomer kann insbesondere aus folgender Gruppe gewählt werden: Methylmethacrylat, Methylacrylat, Hydroxyethylmethacrylat, Polyethylenglycolmonomethacrylate verschiedener Kettenlänge (M = 200, 400, 526, 1000,...), N-Isopropylacrylamid, Diethylacrylamid, Methacrylsäure, Acrylsäure, Acrylamidopropansulfonsäure, Carbonsäurederivate mit polymerisationsfähiger Gruppe, Sulfonsäurederivate mit polymerisationsfähiger Gruppe, Phosphorsäurederivate mit polymerisationsfähiger Gruppe, Styrolsulfonsäure, Styrolphosphorsäure, polymerisationsfähige Ammonium-, Sulfonium-, Phosphoniumderivate, bi- und polyfunktionelle Monomere, polymerisationsfähige Derivate auf der Basis von Polyimiden, Heparin, fluorierte polymerisationsfähige Monomere, Monomere auf der Basis von Aminosäuren, Kohlenhydraten, Acry-lamid, polymerisationsfähige Detergentien, Alkyle verschiedener Kettenlänge mit polymerisationsfähiger Gruppe, Hexylmethacrylat, tert-Butylmethacrylat. Selbstverständlich können auch weitere, hinsichtlich des Polymerträgermaterials sowie des von der Adsorption abzuhaltenden Stoffes optimierte Monomere zum Einsatz kommen. Auch ist die Verwendung von Monomerengemischen, bestehend aus zwei oder mehreren ausgewählten Monomeren, im Rahmen der vorliegenden Erfindung denkbar.

Das Trägermaterial kann unterschiedlichste Materialien umfassen, vorzugsweise solche, die den üblichen, in der Industrie verwendeten Reinigungsprozeduren standhalten. Besonders gut geeignete Polymermaterialien stellen organische Polymermaterialien dar, insbesondere Polysulfon, Polyethersulfon, Polyolefin, etwa Polypropylen oder Polyethylen, Polyamid, Polyester, Polycarbonat, Polyacrylnitril, Polyvinylidenfluorid, Polytetrafluorethylen, Polyacrylat, Polyacrylamid, Cellulose, Amylose, Agarose, oder Derivate von diesen, mit unterschiedlichen Morphologien. Auf diesen Materialien lässt sich in der Regel die in-situ Polymerisation eines geeigneten Monomers ohne weitere Vorbehandlung der Materialoberfläche durchführen.

Als Trägermaterial eignen sich jedoch ebenfalls anorganische Polymere, insbesondere Metall, Glas, Silikat, Keramik oder dergleichen. Da solche Materialien häufig nicht ohne weiteres der Modifizierung mit dem Monomer zugänglich sind, können die Oberflächen vor der Modifizierung gegebenenfalls chemisch vorbehandelt werden oder mit einem organischen Polymermaterial beschichtetet werden, um eine mit dem Monomer reaktionsfähige funktionelle Gruppe auf der Materialoberfläche zu etablieren. Beispielsweise können Gläser oder Keramiken durch Silanisierung mit einem geeigneten Silan auf bekannte Weise vorbehandelt werden.

Das Material kann auch extern beziehungsweise intern durch einen zusätzlichen inerten Träger beziehungsweise Partikel, Fasern oder Netzwerke aus Polymer, Glas oder Metall verstärkt werden, wie es beispielsweise von trägerverstärkten Keramikmembranen bekannt ist. Je nach Zielstellung können aus diesem Spektrum oder anderen Materialien Basismaterialien für die Herstellung Antifouling-modifizierter Materialien gewählt werden. Für Antifouling-Membranen, beispielsweise für die Filtration von Bier, werden vorzugsweise Flachmembranen aus Polyethersulfon (PES) oder Polysulfon (PSU) als Material gewählt.

Das Verfahren gemäß der vorliegenden Erfindung kann vorteilhaft zur Herstellung beziehungsweise Modifizierung unterschiedlichster, mit der Lösung oder der Suspension in Kontakt stehender Gegenstände poröser oder nicht-poröser Struktur eingesetzt werden. Besonders vorteilhaft kann das Verfahren zur Unterdrückung des Foulings bei porösen, zur Filtration oder Dialyse der Lösung oder Suspension eingesetzten Membranen verwendet werden, die erfindungsgemäß entsprechend modifiziert werden. Besonders vorteilhaft handelt es sich hierbei um Ultra- oder Mikrofiltrationsmembranen, insbesondere aus einem organischen Polymermaterial, mit einer symmetrischen oder asymmetrischen Porenstruktur und einer Porengröße in einem Bereich von nm bis µm. Es können daneben auch poröse Materialien, insbesondere Sintermaterialien wie etwa Keramikmembranen, oder nicht-poröse Materialien, erfindungsgemäß modifiziert und verwendet werden, insbesondere Filme, Folien, Schläuche, Leitungen, Dialysematerialien, Behältnisse, Katheter, Infusionsnadeln, Drainagen, medizinische Implantate, Reaktoren oder dergleichen.

Die große Bandbreite von auf Materialoberflächen applizierbaren Monomeren erlaubt den Einsatz des erfindungsgemäßen Antifouling-Verfahrens in einer Vielzahl von Anwendungsbereichen.

Das Verfahren, insbesondere unter Verwendung erfindungsgemäß oberflächen-modifizierter Membranen, kann besonders vorteilhaft in der Lebensmitteltechnologie bei Filtrationsprozessen eingesetzt werden, insbesondere bei Steril- oder Klarfiltration von flüssigen Nahrungsmitteln oder Getränken, insbesondere von Bier, Wein, Fruchtsäften oder Molkereiprodukten.

Am Beispiel der Bierfiltration soll der Vorteil der vorliegenden Erfindung näher erläutert werden. Bier wird zur Erzielung eines einwandfreien Geschmacks und eines feinen Glanzes üblicherweise einer Filtration (Klärung) unterzogen. Dabei werden in mehreren Filtrationsstufen Trübungsbildner, wie Eiweißgerbstoffverbindungen, Hopfenharze, Hefezellen und auch noch vorhandene bierschädliche Bakterien, entfernt. Neben der Optik und Sensorik wird die Haltbarkeit des Bieres verbessert. Während des gesamten Filtrationsprozesses müssen Druck- und Temperaturunterschiede vermieden werden, damit das im Bier gelöste Kohlendioxid nicht aufschäumt. Die Bierfiltration wird in drei Abschnitte unterteilt, Vorklärung, Bierstabilisation und Blank- beziehungsweise Entkeimungsfiltration. Im letztgenannten Filtrationsabschnitt werden in der Regel vorzugsweise Ultrafiltrationsmembranen aus Polyethersulfon (PES) mit einer Porenweite von 0,45 µm eingesetzt. Diese Filtrationsstufe ist herkömmlich besonders von Fouling-Prozessen betroffen, wobei das Fouling in Form einer unspezifischen Verblockung von Filterhilfsstoffen, wie zum Beispiel von Kieselgur, Polyvinylpolypyrrolidon (PVPP) und β-Glucanen, auf der Membranoberfläche auftritt. In der Hauptsache wird die insbesondere durch hohe Scherkräfte verstärkte Gelbildungsneigung der β-Glucane für das Auftreten von Filtrationsproblemen und die Bildung von Trübungen während der Lagerung verantwortlich gemacht. Die Folgen sind niedrige Standzeiten der eingesetzten Membranen, niedrige Durchflussraten und geringere Filterleistungen. Gemäß dem Stand der Technik treten daher bei einer großen tangentialen Anströmung von Bier auf das Filtermedium in verhältnismäßig kurzer Zeit Verstopfungen auf. Nur mit einer geringen Anströmung von etwa 1 bis 3 hl/qm h werden derzeit brauchbare Ergebnisse mit akzeptablen Filterstandzeiten erzielt.

Eine erfindungsgemäße oberflächenmodifizierte Ultrafiltrationsmembran ist demgegenüber in der Lage, den Foulingprozess bei der Bierfiltration bei höherer tangentialer Anströmung auf der Membranoberfläche zu vermindern. Das führt dazu, dass der Reinigungszyklus reduziert werden kann und die Lebensdauer der Membran erhöht wird. Die Gelbildung der β-Glucane kann zwar nicht vollständig verhindert werden, jedoch können durch das geringere Affinitäts- und Adsorptionsverhalten der funktionalisierten Membran durch die Gelschichten verursachte Ablagerungen an der Membranoberfläche minimiert werden. Ein Vorteil der Verwendung einer erfindungsgemäß modifizierten Membran liegt darin, dass eine Lebensdauererhöhung (Standzeit) der Membran von mindestens 30 % erreicht werden kann. Ferner erlaubt das Verfahren gegenüber derzeitiger Anlagen um etwa 50 % höhere Filterleistungen. Schließlich wird durch eine wesentliche Reduzierung der Reinigungszyklen zirka 20 % weniger Prozesswasser für die Rückspülung benötigt und kann somit eingespart werden. Darüber hinaus können Personal-, Wartungs-, Energie- und Entsorgungskosten minimiert werden.

Eine weitere bevorzugte Anwendung des erfindungsgemäßen Antifouling-Verfahrens besteht in der Medizintechnik, wobei das oberflächen-modifizierte Material für Gegenstände verwendet wird, die sich in Langzeit-Kontakt mit Patienten, insbesondere mit Geweben oder Körperflüssigkeiten jeglicher Art, befinden. Dabei kommt insbesondere der Einsatz für Infusionsnadeln, Kanülen, Kathetern, Implantaten und dergleichen in Frage.

Ferner können entsprechend modifizierte Antifouling-Materialien in der Biotechnologie oder Pharmaindustrie Anwendung finden, wobei das Material insbesondere für Gegenstände zur Filtration von Flüssigkeiten, zum Anreichern von Substanzen aus Flüssigkeiten, zum Entsalzen, zur dead-end-Filtartion, in cross-flow-Anwendungen oder dergleichen verwendet werden kann.

Schließlich können die erfindungsgemäßen Antifouling-Materialien für mit Gewässern in Kontakt stehende Gegenstände eingesetzt werden. Insbesondere können (Kunststoffbeschichtete) Metallrümpfe von Schiffen mit einer Antifouling-Modifizierung versehen werden, die einer Ansiedelung von Mikroorganismen und komplexen Strukturen entgegenwirkt. Ebenso kann das Verfahren in der Abwasserreinigung, insbesondere zur Reinigung kommunaler Abwässer, technischer Prozessabwässer der Industrie oder Abwässer medizinischer Einrichtungen eingesetzt werden, wobei das Material mit erfindungsgemäß modifizierter Oberfläche auch hier für Gegenstände in Langzeitkontakt mit dem Gewässer verwendet wird, insbesondere für Filter oder Behältnissen.

Das zur Durchführung des erfindungsgemäßen Verfahrens geeignete Material mit verringerter Adsorptionsneigung für Moleküle oder biologischen Zellen aus Lösungen oder Suspensionen wird durch Oberflächenmodifizierung des Trägermaterials durch in-situ Polymerisation ausgewählter Monomere an der Oberfläche hergestellt, durch photoinitiierte heterogene Pfropfpolymerisation unter Erzeugung von kovalent auf der Materialoberfläche gebundener Pfropfpolymeren aus geeigneten Monomeren. Das Verfahren wird besonders vorteilhaft streng oberflächenselektiv bezüglich des Trägermaterials durchgeführt, das heißt unter Radikalbildung, die streng auf die Materialoberfläche begrenzt bleibt und eine Materialbeeinträchtigung ausschließt. Das Verfahren zeichnet sich ferner durch eine sehr gleichmäßige, über die gesamte Oberfläche verteilte Schichtdicke aus. Die Antifouling-Materialien können dabei nach einem Verfahren erhalten werden, das im Wesentlichen aus folgenden Schritten besteht:
i) Das Trägermaterial wird zunächst mit einem geeigneten Photoinitiator oberflächenbeschichtet, der nach Lichtanregung an der Trägeroberfläche Radikale erzeugen kann, vorzugsweise durch Wasserstoffabstraktion und damit ohne Matrixpolymerdegradation des Trägermaterials.
ii) Das beschichtete Trägermaterial wird anschließend in Gegenwart eines ausgewählten funktionellen Monomers oder Monomerengemisches mit Licht geeigneter Wellenlänge (zum Beispiel des UV-Bereichs) belichtet, wobei eine funktionelle Schicht, die aus am Trägermaterial kovalent verankerten, untereinander unvernetzten funktionellen Pfropfpolymeren besteht, gebildet wird. Die Belichtung erfolgt vorzugsweise selektiv, so dass nur der Photoinitiator angeregt wird.
iii) Nicht umgesetzte Monomere, Photoinitiator sowie lösliche Homo- oder Copolymere beziehungsweise Photoinitiatorfolgeprodukte werden schließlich von dem Trägermaterial extrahiert.

Auch eine sequentielle Aktivierung/Initiierung der Pfropfpolymerisation ist möglich, indem zunächst die Belichtung des gemäß Stufe i) mit dem Photoinitiator beschichteten Trägermaterials in Gegenwart von Sauerstoff oder mit nachträglicher Exposition in Sauerstoff unter Bildung von Peroxiden des Trägermaterials erfolgt und danach die Reaktion mit dem Monomer thermisch initiiert wird. Auch andere heterogen chemisch initiierte Reaktionen zur Initiierung einer Pfropfpolymerisation sind anwendbar.

Als Photoinitiator eignen sich besonders Benzophenon und strukturell verwandte Ketonderivate. Die Beschichtung mit dem Photoinitiator in Stufe i) kann aus einer Lösung in einem Nichtlösungsmittel für das Matrixpolymer durch Dip-Coating oder Imprägnieren vorgenommen werden; sie kann aber gegebenenfalls auch ohne zusätzlichen Verfahrensschritt direkt von der in Stufe ii) beschriebenen Pfropfcopolymerisation erfolgen, indem der Photoinitiator aus einer Mischung aus Initiator, Monomer beziehungsweise Monomergemisch und gegebenenfalls Lösungsmittel an der Trägeroberfläche adsorbiert wird.

Bei vorgegebenem Trägermaterial mit entsprechender homogener oder poröser Struktur und damit geringer oder größerer spezifischer Oberfläche, lassen sich über die Pforpfpolymerisationsbedingungen (Photoinitiatorbeschichtung, Monomerkonzentration, Belichtungsdauer) der Funktionalisierungsgrad und damit die Beladung pro Fläche in weiten Bereichen einstellen. Bei Wahl geeigneter Bedingungen (Lichtabsorption von Photoinitiator und Trägermaterial) sind gleichmäßige Funktionalisierungen dicker poröser Schichten möglich.

Die vorzugsweise angewandte Photomodifizierung gestattet in einem schnellen und effektiven Verfahren die reproduzierbare und gleichmäßige Funktionalisierung großer kontinuierlicher organischer oder anorganischer Polymermaterialien.

Weitere vorteilhafte Ausgestaltungen der Erfindung sind Gegenstand der übrigen Unteransprüche.

Die Erfindung wird nachfolgend in Ausführungsbeispielen anhand von Figuren näher erläutert, welche zeigen:
- Figur 1: Adsorption von BSA an HEMA-modifizierten PES-Membranen in Abhängigkeit von dem Pfropfgrad;
- Figur 2: relativer Fluss durch PEG400-modifizierte und nicht-modifizierte PES-Membranen in Abhängigkeit vom durchgesetzten Volumen;
- Figur 3: Vergleich der Filterleistung von BSA an PEG400MA-modifizierten und unmodifizierten PES-Membranen unterschiedlicher Porengröße und
- Figur 4: Vergleich der Filterleistung von anionisch und kationisch modifizierten und nicht-modifizierten Keramikmembranen in Abhängigkeit von der Filtrationsdauer.

### Beispiel 1: Modifizierung von PES/PSU-Membranen mit Photopfropfung

### Vorbereitung und Vorextraktion der PES/PSU-Materialien

Zugeschnittene Membranen (zum Beispiel DIN A4) aus Polyethersulfon (PES) oder Polysulfon (PSU) werden etwa 1 Stunde in Methanol bei 40 °C vorsichtig extrahiert. Nach Trocknung der Membranen werden die Membranen gewogen.

### Beladung mit Photoinitiator

Eine definierte Konzentration einer Photoinitiatorlösung (zum Beispiel 0,15 M Benzophenon (BP) in Methanol) wird zunächst beispielsweise photometrisch überprüft und gegebenenfalls korrigiert. Vor der Beladung wird die Lösung filtriert. Die Membran wird für 10 Minuten in einem geeigneten Gefäß mit der Initiatorlösung gegeben. Nach Entnahme wird die Membran getrocknet und die adsorbierte Menge an Photoinitiator gravimetrisch durch Differenzwägung bestimmt. Anschließend wird die Membran in eine vorbereitete, entgaste Lösung des Monomers gelegt. Die Standzeit beträgt 30 Minuten, wobei ein leichter Stickstoffstrom eingeleitet wird.

### Photopfropfung

Das Reaktionsgefäß mit der mit der Monomerlösung bedeckten Membran wird mit einem je nach Photoinitiator geeigneten Filter nach Vorgabe (abhängig vom gewünschten Pfropfgrad) der benötigten Strahlungsdosis ausgesetzt. Nach beendeter Bestrahlung erfolgt eine Nachreaktionszeit von 15 Minuten mit anschließender Überführung zur Nachextraktion.

### Nachextraktion

Die nach oben genanntem Verfahren photochemisch modifizierten Membranen werden zuerst mit deionisiertem Wasser bei 50 °C extrahiert. Danach werden die Membranen in ausreichend Methanol bei 40 °C extrahiert. Die Extraktion wird so lange wiederholt, bis keine weiteren Reste des Photoinitiators mehr in der Membran enthalten sind.

Die gemäß diesem allgemeinen Verfahren erhaltenen Membranen sind insbesondere für die Bierfiltration geeignet, wie aus den folgenden Beispielen anhand von Affinitätsuntersuchungen unterschiedlich oberflächen-modifizierter PES-Membranen verschiedener Porengröße gegenüber der Anlagerung von Rinderserumalbumin (BSA) deutlich wird.

### Beispiel 2: Adsorptionsneigung von BSA an HEMA-modifizierten PES-Membranen

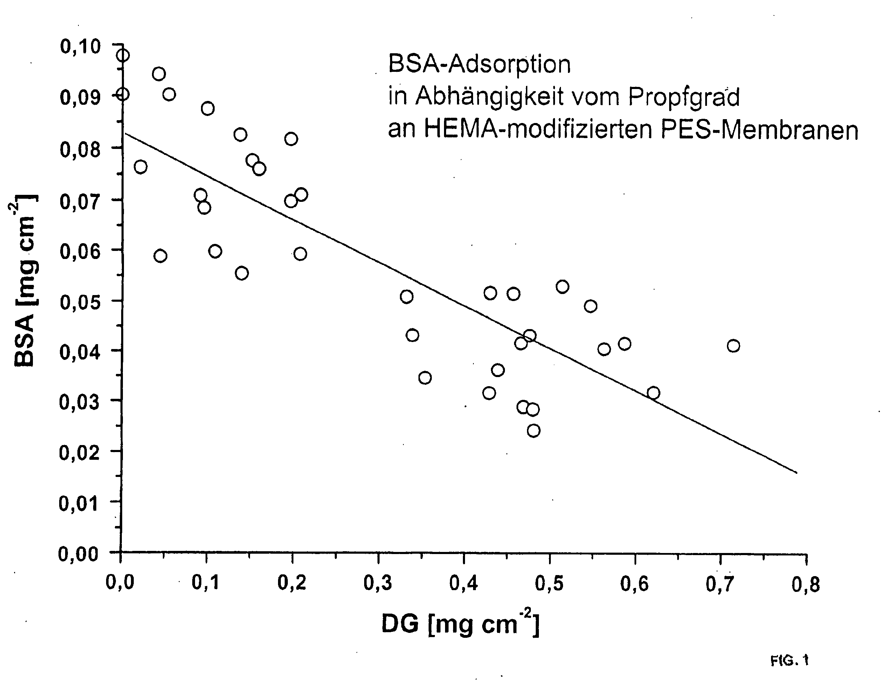

PES-Membranen werden nach der allgemeinen Vorschrift gemäß Beispiel 1 mit dem Monomer Hydroxyethylmethacrylat (HEMA) modifiziert. Dabei werden unterschiedliche Pfropfgrade im Bereich von 0 bis 0,8 mg/cm² durch Variation der Strahlungsdosis während der Photopfropfung eingestellt. Anschließend werden die HEMA-modifizierten Membranen zur Bestimmung der unspezifischen Adsorption für zwei Stunden mit einer 1%igen wässrigen Lösung von Rinderserumalbumin (BSA) in Kontakt gebracht. Die Ermittlung des Beladungsgrades der Membranen mit BSA erfolgt anschließend durch Differenzwägung der getrockneten Membranen vor und nach der BSA-Inkubation. Wie aus Figur 1 hervorgeht, nimmt die BSA-Beladung der Membranen mit zunehmenden HEMA-Pfropfgrad näherungsweise linear ab. Dabei wird bei einem Pfropfgrad von 0,7 mg/cm² eine Reduzierung der BSA-Beladung um etwa 60 bis 70 % gegenüber nicht modifizierter Membranen erzielt.

### Beispiel 3: Adsorptionsneigung von BSA an PEG400-modifizierten PES-Membranen

PES-Membranen (3 x 3 cm) unterschiedlicher Porengröße, [0.45 µm (PES 4F), 0.50 µm (PES 5F), 0.55 µm (PES 6F)] werden nach der allgemeinen Vorschrift gemäß Beispiel 1 mit dem Monomer Polyethylenglykol 400 (PEG400) unter Erhalt eines Pfropfgrades im Bereich von 35 bis 46 mg/g modifiziert.

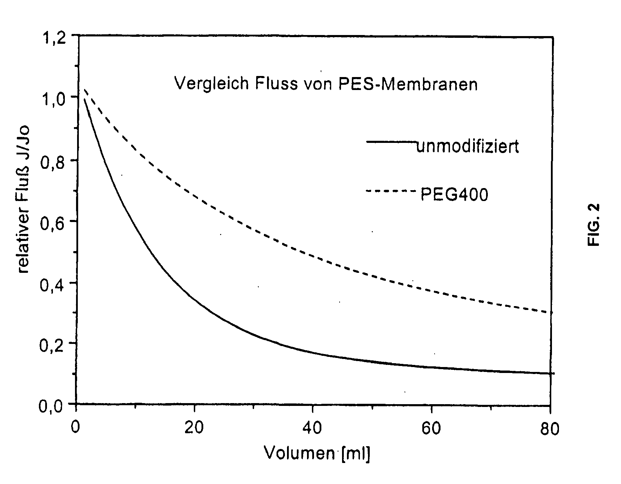

Die Durchflussrate der PEG400-modifizierten Membranen wird dann nach Durchsatz unterschiedlicher Volumina einer Lösung von 1 % BSA in Puffer im Vergleich zur einer nicht-modifizierten PES-Membran ermittelt. Die Membranen werden jeweils in eine Druckfiltrationszelle (Amicon 8010) eingespannt und die benötigte Durchlaufzeit für jeweils 1 ml Lösung bei 1.5 bar Überdruck mit Hilfe einer Mensur bestimmt. Wie aus Figur 2 deutlich wird, nimmt die Flussrate der modifizierten Membran gegenüber der nicht-modifizierten mit kumuliertem Durchsatz der Proteinlösung signifikant langsamer ab.

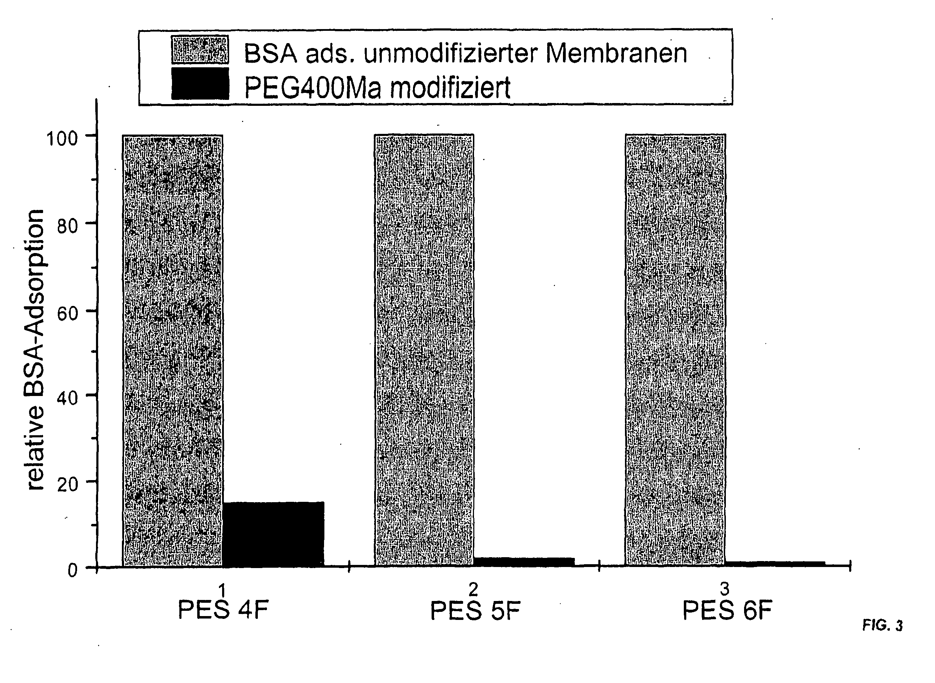

Die PEG400-modifizierten Membranen unterschiedlicher Porengröße werden anlog Beispiel 2 für eine definierte Dauer mit einer wässrigen Lösung von Rinderserumalbumin (BSA) in Kontakt gebracht und anschließend die Adsorption von BSA an die Membranen im Vergleich zu nicht-modifizierten PES-Membranen bestimmt. Die Ergebnisse sind in Figur 3 gezeigt, wo die BSA-Beladung der modifizierten Membranen jeweils in Relation zu den nicht-modifizierten Membranen (100 %) dargestellt sind. Es wird deutlich, dass die PEG400-Modifizierung das Protein-Fouling um mindestens 80 % reduziert.

### Beispiel 4: Modifizierung von Keramikmembranen mit Photopfropfung

### Hydrophobisierung

Keramikmembranen mit Edelstahl-Stützgewebe und einer Porengröße von 30 nm werden ohne weitere Vorbehandlung für 24 Stunden am Siedepunkt unter Rückflusskühlung in einer Lösung aus 5 % Trimethoxypropylsilan in Toluol silanisiert. Anschließend erfolgt eine Extraktion der Keramikmembranen mit Toluol und nachfolgender Trocknung.

### Beschichtung mit Photoinitiator

Die Keramikmembranen werden für eine Stunde in einer Lösung aus 80 mmolar Benzophenon in Methanol getaucht.

### Pfropfung

Keramikmembranen werden aus der BP-Lösung in eine Monomerlösung definierter Konzentration überführt und für 15 min stehen gelassen. Dabei werden als Monomere Styrolsulfonsäure-Na (anionisch) oder Pleximon 760 (2-Trimethylammoniumethylmethacrylat-chlorid; kationisch) eingesetzt wird. Anschließend erfolgt UV-Bestrahlung mit einer definierten Dosis.

### Extraktion

Nach erfolgter Photopfropfung erfolgt eine Extraktion zunächst für eine Stunde in H₂O, dann für eine Stunde in Methanol.

Die so modifizierten Keramikmembranen eignen sich insbesondere für die Aufreinigung von kommunalen Abwässern oder industriellen Prozesswässern. Durch die kleinen Poren eignet sich dieses Material auch zur Trinkwasseraufbereitung oder zur Abwasserbehandlung medizinischer Einrichtungen, da es auch in der Lage ist, Viren und Bakterien aus dem Wasser zu entfernen.

### Beispiel 5: Adsorptionsneigung von BSA an anionisch oder kationisch modifizierten Keramikmembranen

Die gemäß Beispiel 4 hergestellten anionisch beziehungsweise kationisch modifizierten Keramikmembranen werden Flussmessungen mit einer BSA-Lösung in Acetatpuffer (pH 4,75) unterzogen. Hierfür wurden die Membranen zunächst mit Methanol angefeuchtet und anschließend eine 1%ige BSA-Lösung Lösung in Acetatpuffer (pH 4,75) über die Membranen filtriert.

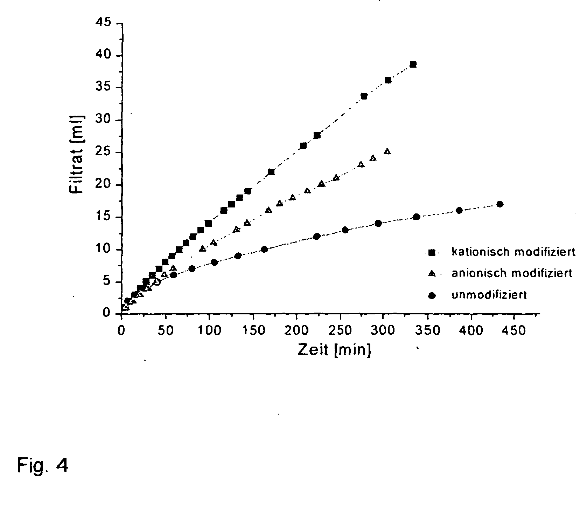

In Figur 4 sind die Flusskurven einer unmodifizierten im Vergleich zu den beiden modifizierten Varianten dargestellt. Eine zunehmende Verblockung der Membran wird in dieser Art der Auftragung durch eine zunehmende Abflachung der Kurve deutlich. Dementsprechend ist eine vollständig verstopfte Membran durch eine horizontale Linie charakterisiert. Es ist deutlich zu sehen, dass die Membranen anfangs noch sehr ähnliche Flussleistungen haben, mit fortschreitender Filtrationsdauer aber deutliche Unterschiede auftreten. Dabei zeigen die erfindungsgemäß modifizierten Proben jeweils verbesserte Flussleistungen im Vergleich zur unmodifizierten Membran. Die Unterschiede zwischen den modifizierten Proben lassen sich durch das verwendete Meßsystem erklären.

### ABKÜRZUNGEN

- BP: Benzophenon
- BSA: Rinderserumalbumin
- DG: Pfropfgrad (degree of grafting)
- HEMA: Hydroxyethylmethacrylat
- HHL: halbe Halblast
- PES: Polyethersulfon
- PEG: Polyethylenglycol

## Patentansprüche

1. Verfahren zur Verringerung einer Adsorptionsneigung von Molekülen oder biologischen Zellen aus Lösungen oder Suspensionen an einer mit der Lösung oder Suspension in Kontakt stehenden Materialoberfläche, wobei als Material, ein organisches oder anorganisches Trägermaterial mit einer modifizierten Oberfläche verwendet wird und wobei die Modifizierung der Oberfläche durch photochemische in-situ Pfropfpolymerisation von Monomeren an der Oberfläche des Trägermaterials erfolgt, und das Monomer in Abhängigkeit einer elektrostatischen Ladung und/oder Polarität und/oder räumlichen Struktur des abzuweisenden Moleküls oder der abzuweisenden Zelle derart ausgewählt wird, dass eine verringerte Affinität des modifizierten Materials gegenüber dem Molekül oder der Zelle resultiert, **dadurch gekennzeichnet, dass** die photochemische in-situ Pfropfpolymerisation in Gegenwart eines Photoinitiators erfolgt, der nach Lichtanregung Radikale an der Oberfläche des Trägermaterials durch Wasserstoffabstraktion erzeugt.

2. Verfahren nach Anspruch 1, **dadurch gekennzeichnet, dass** die Auswahl des Monomers derart erfolgt, dass das Material eine verringerte Adsorptionsneigung für Proteine, Peptide, Peptoide, Peptidomimetika, Enzyme, Antikörper, Impfstoffe, Nukleinsäuren, insbesondere DNA, RNA oder Plasmide, Kohlenhydrate, Glucane, Huminstoffe und/oder Derivate von diesen und/oder für andere organische Moleküle und/oder oder kleine Partikel erhält.

3. Verfahren nach Anspruch 1, **dadurch gekennzeichnet, dass** die Auswahl des Monomers derart erfolgt, dass das Material eine verringerte Adsorptionsneigung für mikrobielle Zellen, insbesondere für Bakterien, Pilze, Viren, Blutzellen, Gewebezellen und/oder dergleichen erhält.

4. Verfahren nach einem der vorhergehenden Ansprüche, **dadurch gekennzeichnet, dass** das Monomer insbesondere aus der Gruppe umfassend Methylmethacrylat, Methylacrylat, Hydroxyethylmethacrylat, Polyethylenglycolmonomethacrylate verschiedener Kettenlänge, N-Isopropylacrylamid, Diethylacrylamid, Methacrylsäure, Acrylsäure, Acrylamidopropansulfonsäure, Carbonsäurederivate mit polymerisationsfähiger Gruppe, Sulfonsäurederivate mit polymerisationsfähiger- Gruppe, Phosphorsäurederivate mit polymerisationsfähiger Gruppe, Styrolsulfonsäure, Styrolphosphorsäure, polymerisationsfähige Ammonium-, Sulfonium-, Phosphoniumderivate, bi- und polyfunktionelle Monomere, polymerisationsfähige Derivate auf der Basis von Polyimiden, Heparin, fluorierte polymerisationsfähige Monomere, Monomere auf der Basis von Aminosäuren, Kohlenhydraten, Acrylamid, polymerisationsfähige Detergentien, Alkyle verschiedener Kettenlänge mit polymerisationsfähiger Gruppe, Hexylmethacrylat, tert-Butylmethacrylat ausgewählt wird.

5. Verfahren nach einem der Ansprüche 1 bis 4, **dadurch gekennzeichnet, dass** als Trägermaterial ein organisches Polymermaterial verwendet wird, insbesondere Polysulfon, Polyethersulfon, Polyolefin wie Polypropylen oder Polyethylen, Polyamid, Polyester, Polycarbonat, Polyacrylnitril, Polyvinylidenfluorid, Polytetrafluorethylen, Polyacrylat, Polyacrylamid; Cellulose, Amylose, Agarose oder ein Derivat von diesen.

6. Verfahren nach einem der Ansprüche 1 bis 4, **dadurch gekennzeichnet, dass** als Trägermaterial ein anorganisches Polymer, insbesondere Metall, Glas, Silikat, Keramik oder dergleichen, verwendet wird.

7. Verfahren nach Anspruch 6, **dadurch gekennzeichnet, dass** das Trägermaterial vor der Modifizierung der Oberfläche durch in-situ Polymerisation des Monomers chemisch vorbehandelt wird oder mit einem organischen Polymermaterial beschichtetet wird.

8. Verfahren nach einem der Ansprüche 1 bis 7, **dadurch gekennzeichnet, dass** das Material für poröse, zur Filtration oder Dialyse der Lösung oder Suspension eingesetzte Membranen verwendet wird.

9. Verfahren nach Anspruch 8, **dadurch gekennzeichnet, dass** die Membran eine Ultra- oder Mikrofiltrationsmembran, insbesondere aus einem organischen Polymermaterial, mit einer symmetrischen oder asymmetrischen Porenstruktur ist.

10. Verfahren nach einem der Ansprüche 1 bis 7, **dadurch gekennzeichnet, dass** das Material für mit der Lösung oder der Suspension in Kontakt stehende porösen Materialien, insbesondere Sintermaterialien wie Keramikmembranen, oder nicht-porösen Materialien verwendet wird, insbesondere für Filme, Folien, Schläuche, Leitungen, Dialysematerialien, Behältnisse, Katheter, Infusionsnadeln, Drainagen, medizinische Implantate, Reaktoren oder dergleichen.

11. Verwendung eines Verfahrens nach einem der Ansprüche 1 bis 10 in der Lebensmitteltechnologie für Materialien zur Filtration, insbesondere Steril- oder Klarfiltration von flüssigen Nahrungsmitteln oder Getränken, insbesondere von Bier, Wein, Fruchtsäften oder Molkereiprodukten.

12. Verwendung eines Verfahrens nach einem der Ansprüche 1 bis 10 in der Medizintechnik, wobei das Material für Gegenstände in Kontakt mit Patienten verwendet wird, insbesondere mit Geweben oder Körperflüssigkeiten jeder Art.

13. Verwendung eines Verfahrens nach einem der Ansprüche 1 bis 10 in der Biotechnologie oder Pharmaindustrie, wobei das Material insbesondere für Gegenstände zur Filtration von Flüssigkeiten, zum Anreichem von Substanzen aus Flüssigkeiten, zum Entsalzen, zur dead-end-Filtartion, in cross-flow-Anwendungen oder dergleichen.

14. Verwendung eines Verfahrens nach einem der Ansprüche 1 bis 10 in der Abwasserreinigung, insbesondere zur Reinigung kommunaler Abwässer, technischer Prozessabwässer der Industrie oder Abwässer medizinischer Einrichtungen.

15. Verwendung eines Verfahrens nach einem der Ansprüche 1 bis 10 für mit Gewässern in Kontakt stehenden Gegenständen, insbesondere Schiffsrümpfen.

## Claims

1. Method for reducing an adsorption tendency of molecules or biological cells from solutions or suspensions to a material surface coming into contact with the solution or suspension, wherein an organic or inorganic carrier material with a modified surface is used as the material and wherein the surface is modified by photochemical, in-situ graft polymerisation of monomers on the surface of the carrier material, and the monomer is selected dependent upon an electrostatic charge and/or polarity and/or spatial structure of the molecule or the cell to be repelled in a manner, which results in a reduced affinity of the modified material relative to the molecule or the cell,
**characterised in that**
the photochemical, in-situ graft polymerisation takes place in the presence of a photoinitiator, which, after excitation by light, forms radicals on the surface of the carrier material by hydrogen abstraction.

2. Method according to claim 1,
**characterised in that**
the monomer is selected in such a manner that the material acquires a reduced adsorption tendency for proteins, peptides, peptoids, peptidomimetics, enzymes, antibodies, vaccines, nucleic acids, especially DNA, RNA and plasmids, carbohydrates, glucanes, humic matter and/or derivatives thereof and/or other organic molecules and/or small particles.

3. Method according to claim 1,
**characterised in that**
the monomer is selected in such a manner that the material acquires a reduced adsorption tendency for microbial cells, especially bacteria, fungi, viruses, blood cells, tissue cells and/or similar.

4. Method according to any one of the preceding claims,
**characterised in that**
the monomer is selected especially from the group comprising methyl methacrylate, methyl acrylate, hydroxyethylmethacrylate, polyethylene glycol monomethacrylates of different chain lengths, N-isopropylacrylamide, diethylacrylamide, methacrylic acid, acrylic acid, acrylamidopropanosulfonic acid, carboxylic acid derivatives with a polymerisable group, sufonic acid derivatives with a polymerisable group, phosophoric acid derivatives with a polymerisable group, styrene sulfonic acid, styrene phosphoric acid, polymerisable ammonium derivatives, sulfonium derivatives, phosphonium derivatives, bi-functional and poly-functional monomers, polymerisable derivatives based on polyimides, heparin, fluorinated polymerisable monomers, monomers based on amino acids, carbohydrates, acrylamide, polymerisable detergents, alkyls of different chain lengths with a polymerisable group, hexylmethacrylate, tert-butylmethacrylate.

5. Method according to any one of claims 1 to 4,
**characterised in that**
an organic polymer material is used as the carrier material, especially polysulfone, polyethersulfone, polyolefin such as polypropylene or polyethylene, polyamide, polyester, polycarbonate, polyacrylnitrile, polyvinylidene fluoride, polytetrafluoroethylene, polyacrylate, polyacrylamide, cellulose, amylose, agarose or a derivative thereof.

6. Method according to any one of claims 1 to 4,
**characterised in that**
an inorganic polymer, especially a metal, glass, silicate, ceramic or similar, is used as the carrier material.

7. Method according to claim 6,
**characterised in that**
before the modification of the surface by in-situ polymerisation of the monomer the carrier material is chemically pre-treated or is coated with an organic polymer material.

8. Method according to any one of claims 1 to 7,
**characterised in that**
the material is utilised for porous membranes used for filtration or dialysis of the solution or suspension.

9. Method according to claim 8,
**characterised in that**
the membrane is an ultra-filtration membrane or micro-filtration membrane, especially made of an organic polymer material with a symmetrical or asymmetrical pore structure.

10. Method according to any one of claims 1 to 7,
**characterised in that**
the material is utilised for porous materials, especially sintered materials such as ceramic membranes, or non-porous materials coming into contact with the solution or the suspension, especially for films, foils, pipes, lines, dialysis materials, containers, catheters, infusion needles, drainage tubes, medical implants, reactors or similar.

11. Use of a method according to any one of claims 1 to 10 in food technology for materials for filtration, especially sterile filtration or clarification of liquid foods or beverages, especially beer, wine, fruit juices or dairy products.

12. Use of a method according to any one of claims 1 to 10 in medical technology, wherein the material is used for articles coming into contact with patients, especially with tissue or bodily fluids of every kind.

13. Use of a method according to any one of claims 1 to 10 in the biotechnology or pharmaceuticals industry, wherein the material is used especially for articles for the filtration of liquids, for the enrichment of substances from liquids, for desalination, for dead-end filtration, in cross-flow applications or similar.

14. Use of a method according to any one of claims 1 to 10 in waste-water treatment, especially for the treatment of municipal sewage, waste water from technical processes in industry or waste water from medical facilities.

15. Use of a method according to any one of claims 1 to 10 for articles coming into contact with water, especially the hulls of boats and ships.

## Revendications

1. Procédé de réduction d'une propension ou tendance à l'adsorption de molécules ou de cellules biologiques issues de solutions ou de suspensions sur une surface de matériau en contact avec la solution ou la suspension, dans lequel on utilise comme matériau un matériau de support organique ou inorganique présentant une surface modifiée, et dans lequel la modification de la surface se fait par polymérisation photochimique par greffage in situ de monomères sur la surface du matériau de support, et dans lequel le monomère est sélectionné, en fonction d'une charge électrostatique et/ou d'une polarité et/ou d'une structure spatiale de la molécule à rejeter ou de la cellule à rejeter, de façon telle qu'il en résulte une affinité réduite du matériau modifié vis-à-vis de la molécule ou de la cellule, **caractérisé en ce que** la polymérisation photochimique par greffage in situ se fait en présence d'un photoinitiateur qui génère, après excitation lumineuse, des radicaux au niveau de la surface du matériau de support par abstraction d'hydrogène.

2. Procédé selon la revendication 1, **caractérisé en ce que** la sélection du monomère se fait de façon telle que le matériau obtient une propension réduite à l'adsorption pour des protéines, des peptides, des peptoïdes, des mimétiques peptidiques, des enzymes, des anticorps, des vaccins, des acides nucléiques, en particulier l'ADN, l'ARN ou des plasmides, des hydrates de carbone, des glucanes, des substances huminiques et/ou leurs dérivés et/ou pour d'autres molécules organiques et/ou de petites particules.

3. Procédé selon la revendication 1, **caractérisé en ce que** la sélection du monomère se fait de façon telle que le matériau obtient une propension réduite à l'adsorption pour des cellules microbiennes, en particulier des bactéries, des champignons, des virus, des cellules sanguines, des cellules des tissus et/ou similaires.

4. Procédé selon l'une des revendications précédentes, **caractérisé en ce que** le monomère est sélectionné en particulier dans le groupe comprenant le méthacrylate de méthyle, l'acrylate de méthyle, le méthacrylate d'hydroxyéthyle, des monométhacrylates de polyéthylèneglycol de différentes longueurs de chaîne, le N-isopropylacrylamide, le diéthylacrylamide, l'acide méthacrylique, l'acide acrylique, l'acide acrylamidopropane-sulfonique, les dérivés d'acides carboxyliques ayant des groupes aptes à la polymérisation, les dérivés d'acides sulfoniques ayant des groupes aptes à la polymérisation, les dérivés d'acide phosphorique ayant des groupes aptes à la polymérisation, l'acide styrène-sulfonique, l'acide styrène-phosphorique, les dérivés d'ammonium, de sulfonium, de phosphonium aptes à la polymérisation, les monomères bi- et polyfonctionnels, les dérivés aptes à la polymérisation à base de polyimides, l'héparine, les monomères fluorés aptes à la polymérisation, des monomères à base d'acides aminés, des hydrates de carbone, l'acrylamide, les détergents aptes à la polymérisation, les alkyles de différentes longueurs de chaîne ayant des groupes aptes à la polymérisation, le méthacrylate d'hexyle et le méthacrylate de tert-butyle.

5. Procédé selon l'une des revendications 1 à 4, **caractérisé en ce que** l'on utilise en tant que matériau de support un matériau polymère organique, en particulier la polysulfone, la polyéthersulfone, une polyoléfine telle que le polypropylène ou le polyéthylène, le polyamide, le polyester, le polycarbonate, le polyacrylonitrile, le fluorure de polyvinylidène, le polytétrafluoroéthylène, le polyacrylate, le polyacrylamide, la cellulose, l'amylose, l'agarose ou un de leurs dérivés.

6. Procédé selon l'une des revendications 1 à 4, **caractérisé en ce que** l'on utilise comme matériau de support un polymère inorganique, en particulier du métal, du verre, du silicate, de la céramique ou similaires.

7. Procédé selon la revendication 6, **caractérisé en ce que** le matériau de support, avant la modification de la surface par polymérisation in situ du monomère, est pré-traité chimiquement ou est recouvert d'un matériau polymère organique.

8. Procédé selon l'une des revendications 1 à 7, **caractérisé en ce que** le matériau est utilisé pour des membranes poreuses, mises en oeuvre pour la filtration ou à la dialyse de la solution ou de la suspension.

9. Procédé selon la revendication 8, **caractérisé en ce que** la membrane est une membrane d'ultra- ou de microfiltration, en particulier en un matériau polymère organique, présentant une structure de pores symétrique ou asymétrique.

10. Procédé selon l'une des revendications 1 à 7, **caractérisé en ce que** le matériau est utilisé pour des matériaux poreux en contact avec la solution ou la suspension, en particulier des matériaux de frittage comme des membranes céramiques, ou des matériaux non poreux, en particulier pour des films, des feuilles, des tuyaux, des conduites, des matériaux de dialyse, des récipients, des cathéters, des aiguilles de perfusion, des drains, des implants médicaux, des réacteurs ou similaires.

11. Utilisation d'un procédé selon l'une des revendications 1 à 10 dans la technologie des produits alimentaires, pour des matériaux destinés à la filtration, en particulier à la filtration stérile ou filtration de clarification de denrées fluides ou de boissons, en particulier de bière, de vin, de jus de fruits ou de produits laitiers.

12. Utilisation d'un procédé selon l'une des revendications 1 à 10 dans la technique médicale, le matériau étant utilisé pour des objets en contact avec les patients, en particulier avec les tissus ou les fluides corporels de tout type.

13. Utilisation d'un procédé selon l'une des revendications 1 à 10 dans la biotechnologie ou l'industrie pharmaceutique, le matériau étant utilisé en particulier pour des objets destinés à la filtration de fluides, à l'enrichissement de substances issues de liquides, à la déminéralisation ou au dessalement, à la filtration en profondeur ou filtration dite "dead end", aux applications à écoulements croisés dites "cross-flow" ou similaire.

14. Utilisation d'un procédé selon l'une des revendications 1 à 10 dans l'épuration des eaux résiduaires, en particulier pour épurer des eaux d'égout communales, des eaux issues de traitements techniques industriels ou des eaux résiduaires d'installations médicales.

15. Utilisation d'un procédé selon l'une des revendications 1 à 10 pour des objets en contact avec des eaux, en particulier des coques de bateaux.
